Europäisches Patentamt

European Patent Office

Office européen des brevets

(11) Numéro de publication: **0 266 233 B1**

# (12) FASCICULE DE BREVET EUROPEEN

(45) Date de publication de fascicule du brevet:
14.08.91

(51) Int. Cl.⁵: **C09K 3/14**

(21) Numéro de dépôt: 87402083.7

(22) Date de dépôt: 18.09.87

(54) **Procédé de polissage de verres organiques avec une composition de polissage à base de cérium.**

(30) Priorité: 26.09.86 FR 8613443

(43) Date de publication de la demande:
04.05.88 Bulletin 88/18

(45) Mention de la délivrance du brevet:
14.08.91 Bulletin 91/33

(84) Etats contractants désignés:
AT BE CH DE ES FR GB IT LI NL SE

(56) Documents cités:
EP-A- 0 031 749
EP-A- 0 126 675
EP-A- 0 133 102
DE-B- 1 263 955
US-A- 3 097 083

(73) Titulaire: RHONE-POULENC CHIMIE
25, quai Paul Doumer
F-92408 Courbevoie Cédex(FR)

(72) Inventeur: **Tastu, Francis**
**Lotissement Les Tamaris Cour des Alouet-**
**tes No. 1**
**Lauzières F-17137 Nieul/sur/Mer(FR)**
Inventeur: **Melard, Pierre**
**4, rue de l'Alma**
**F-92400 Courbevoie(FR)**

(74) Mandataire: **Dutruc-Rosset, Marie-Claude et al**
**RHONE-POULENC INTERSERVICES Service**
**Brevets Chimie 25, Quai Paul Doumer**
**F-92408 Courbevoie Cédex(FR)**

# EP 0 266 233 B1

## Description

La présente invention a pour objet un procédé de polissage des verres organiques avec une composition à base de cérium. L'invention vise plus particulièrement le polissage des lentilles ophtalmiques en matériau organique.

Par l'expression "verres organiques", on désigne tous les matériaux organiques nécessitant d'être polis dans l'application désirée. Ce sont par exemple, les polymères synthétiques le plus souvent des polycarbonates notamment les polydiallylglycol carbonates constituant les lentilles ophtalmiques ou bien ceux sous forme de plaques destinés aux hublots ou pare-brises de véhicules.

On constate à l'heure actuelle que les verres organiques prennent une part croissante du marché de la lunetterie. Leur développement s'explique par le fait que les verres organiques présentent certaines caractéristiques que ne possèdent pas les verres minéraux.

Leur résistance aux chocs en fait une matière première de choix dès qu'il est question de sécurité : lunettes de protection, verres correcteurs pour enfants etc..

De plus, ils sont beaucoup plus légers et ils sont bien adaptés aux lunettes qui requièrent une monture fine ou un grand diamètre de verres.

Le polissage des verres organiques est très délicat et les difficultés de polissage résident dans le fait que ce sont des verres tendres qui sont fragiles et sensibles aux rayures. Un polissage insuffisant laisse subsister de fines rayures et un polissage trop abrasif peut conduire à l'apparition de rayures, de filandres, voire-même d'un voile.

Outre que la composition de polissage doit permettre d'obtenir un bon état de surface du verre organique, il ne faut pas oublier que les impératifs économiques imposent une efficacité polissante suffisante afin de suivre les cadences de production industrielle.

Habituellement, les compositions de polissage sont constituées par un produit abrasif pulvérulent en suspension dans un milieu organique ou aqueux pouvant contenir éventuellement d'autres additifs.

En tant que produits abrasifs, on utilise couramment l'alumine, l'oxyde d'étain ou leurs mélanges. Lorsque lesdits oxydes interviennent dans la composition de polissage, l'efficacité polissante est bonne mais la qualité du poli du verre organique est médiocre au niveau de la transparence détériorée par la présence d'un voile et au niveau de l'état de surface qui présente alors des rayures.

On a préconisé d'améliorer les résultats en faisant appel à un oxyde de terre rare, en particulier l'oxyde cérique.

Ainsi, le brevet américain US-A-3 097 083 décrit une composition de polissage pour verres minéraux comprenant un oxyde de cérium et un hydroxyde cérique sous forme gélatineuse. Le brevet allemand DE-A-1 263955 décrit une composition de polissage pour verres minéraux contenant un oxyde cérique associé à un sel soluble de cérium permettant d'éviter la formation d'un voile à la surface du verre grâce à l'action chimique du nitrate céreux présent dans la composition sur la surface du verre.

Le polissage des verres organiques à l'aide d'une suspension aqueuse d'oxyde cérique ne donne pas satisfaction car de nombreuses rayures fines subsistent à la surface du verre organique ce qui est dû à une insuffisance de polissage.

Pour remédier aux inconvénients précités, on a proposé selon la demande de brevet allemand DE-A-2 508 871, un agent de polissage ayant la composition pondérale suivante : de 30 à 45 % d'oxyde de cérium de granulométrie inférieure à 36 $\mu$m, de 5 à 15 % de glycérine et de 45 à 60 % d'eau.

Les temps de polissage obtenus par la mise en oeuvre dudit agent sont plus longs que ceux obtenus avec les oxydes classiques.

De plus, le poli obtenu ne donne pas entièrement satisfaction lorsque l'on souhaite effectuer sur les lentilles ophtalmiques, des traitements de surface tels que traitement anti-reflet ou anti-abrasion qui nécessitent une excellente qualité du support car ils accentuent la présence d'éventuels défauts.

Pour améliorer la qualité du poli et diminuer le temps de polissage de 10 % par rapport à celui obtenu avec l'oxyde cérique seul, on a proposé selon la demande de brevet français FR-A-2 414 071 un matériau de polissage comportant de l'oxyde cérique en suspension dans de l'eau et associé à un épaississant tel que carboxyméthylcellulose, éthylcellulose, méthylcellulose, alcool polyvinylique, polyacrylate de sodium, polyoxyde de méthylène, carboxypolyméthylène, polyvinylpyrrolidone, caséine, gomme arabique et un agent abaissant la tension superficielle tel que les sels alcalins d'alkylaryl sulfonate, de lauryl sulfonate, de dodécyl sulfonate, de dodécyl sulfate, de lauryl éther sulfate, de dioctyl sulfosuccinate, de dihexyl sulfosuccinate, de diamyl sulfosuccinate, de polyesters d'acide phosphorique et les polysiloxanes.

L'état de surface obtenu en faisant appel au matériau précité est satisfaisant. Cependant, il est nécessaire d'améliorer le temps de polissage car le gain de temps obtenu de 10 % est insuffisant en raison des cadences actuelles de production industrielle des lentilles ophtalmiques.

2

Il était donc souhaitable de disposer d'un procédé de polissage conduisant à une bonne qualité de poli tout en ayant une efficacité polissante telle qu'elle permette des durées de polissage comparables à celles des oxydes classiques de l'art antérieur.

Il a maintenant été trouvé et c'est ce qui constitue l'objet de la présente invention, un procédé de polissage des verres organiques au moyen d'une composition contenant de l'oxyde cérique caractérisée par le fait qu'elle comprend de l'oxyde cérique et un sel céreux soluble dans les conditions de polissage.

Conformément à la présente invention, l'oxyde cérique peut être mis en oeuvre seul ou sous forme d'une composition à base d'oxyde cérique.

Dans l'exposé qui suit de la présente invention, on désigne par oxyde cérique aussi bien l'oxyde cérique seul ou sous forme de composition.

L'oxyde cérique mis en oeuvre selon l'invention peut être tout oxyde cérique présentant les caractéristiques physico-chimiques données ci-après.

L'oxyde cérique se trouve sous forme pulvérulente dont les dimensions des particules sont comprises entre 1 $\mu$m et 20 $\mu$m. D'une manière préférentielle, on fait appel à un oxyde cérique ayant des dimensions variant entre 0,1 $\mu$m et 10 $\mu$m : l'analyse granulométrique étant effectuée à l'aide de l'instrument SEDIGRAPH® 5000 D qui mesure le taux de sédimentation des particules en suspension et présente automatiquement les résultats en une distribution en pourcentages cumulatifs en fonction des diamètres équivalents sphériques (basée sur la loi de Stokes).

Pour ce qui est de la surface spécifique de l'oxyde cérique, elle varie entre 1 et 35 m²/g et l'on choisit, de préférence, un oxyde cérique ayant une surface spécifique comprise entre 3 et 10 m²/g : ladite surface est déterminée selon la méthode BRUNAUER - EMMETT - TELLER décrite dans "The Journal of American Society 60, p. 309 (1938)".

La pureté de l'oxyde cérique employé est indifférente. C'est ainsi que l'on peut faire appel à un oxyde cérique très pur notamment celui disponible dans le commerce sous la dénomination de Opaline® qui est de l'oxyde cérique vendu par la Société Rhône-Poulenc avec une pureté supérieure à 99 %.

On peut également mettre en oeuvre de l'oxyde cérique associé à un ou plusieurs autres oxydes de terres rares et/ou à un ou plusieurs sels.

D'une manière préférentielle, on fait appel **pour mettre en oeuvre le procédé**, à une composition de polissage comprenant au moins environ 30 % en poids d'oxyde cérique.

On peut utiliser l'oxyde cérique sous la forme des compositions décrites dans FR-A-2 472 601.

Les compositions décrites dans FR-A-2 472 601 sont obtenues selon un procédé qui consiste à mélanger simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en oeuvre étant supérieur ou égal au nombre d'équivalents cérium et le pH du milieu réactionnel étant supérieur à 6 ; à filtrer le précipité obtenu ; à le sécher ; à le calciner.

Dans la première étape, on réalise le mélange des réactifs.

La solution de sel de cérium mise en oeuvre peut être toute solution aqueuse de sel de cérium à l'état céreux et/ou cérique soluble dans les conditions de l'invention et, notamment, une solution de chlorure céreux ou de nitrate de cérium à l'état céreux ou cérique, ou du mélange des deux.

La concentration de la solution de sel de cérium n'est pas un facteur critique et elle peut varier dans de larges limites ; une concentration comprise entre 0,5 et 2 moles par litre est préférée.

On introduit préférentiellement le cérium dans le milieu réactionnel à l'état céreux et on l'oxyde à l'état cérique en ajoutant en continu au mélange réactionnel soit isolément, soit en mélange avec une solution autre que celle contenant la base, un agent oxydant compatible avec ce milieu. Parmi les agents oxydants pouvant convenir, on peut citer notamment des solutions de perchlorate, de chlorate, d'hypochlorite, de persulfate de sodium, de potassium ou d'ammonium, d'eau oxygénée ou l'air, l'oxygène, l'ozone. On peut également oxyder le cérium par voie électrochimique. On utilise de préférence l'eau oxygénée.

La proportion d'oxydant par rapport au sel céreux à oxyder peut varier dans de larges limites. Elle est en général supérieure à la stoechiométrie et correspond, de préférence, à un excès compris entre 10 et 40 %.

La solution basique mise en oeuvre peut être notamment une solution aqueuse d'ammoniaque, d'hydroxyde de sodium, de potasse ou de carbonate de sodium et l'on met en oeuvre de préférence une solution d'ammoniaque.

La normalité de la solution basique mise en oeuvre n est pas un facteur critique et peut varier dans de larges limites, elle sera toutefois avantageusement comprise entre 1 et 5 N.

La proportion entre la solution basique et la solution de sel de cérium doit être telle que le nombre d'équivalents basiques introduits soit supérieur ou égal au nombre d'équivalents cérium introduits dans le même temps. Il peut être avantageux de mettre en oeuvre un excès supérieur à 5 % d'équivalents basiques par rapport aux équivalents cérium. Le pH du milieu réactionnel qui doit être alors supérieur à 6, ne doit toutefois pas dépasser 10. Il est avantageusement compris entre 7 et 9. Il peut être particulièrement avantageux de régler le pH dans ces limites à une valeur constante à ± 0,1 unité de pH.

La solution d'au moins un acide et/ou un sel dont le ou les anions sont susceptibles de former des composés insolubles de terres rares selon l'invention peut être notamment toute solution aqueuse d'acide et/ou de sel dont l'anion est choisi parmi le groupe constitué par au moins un des anions suivants : oxalate, fluorure, carbonate, borate, silicate, sulfate, phosphate. Le ou les sels mis en oeuvre sont ceux solubles dans l'eau et, de préférence, les sels d'ammonium, de sodium, de potassium. Cette solution est introduite dans le milieu réactionnel isolément ou en mélange avec la solution basique. On utilise de préférence des sels, en particulier, ceux dont l'anion est un fluorure, un sulfate, un borate ou un phosphate.

La concentration de la solution d'acide et/ou de sel n'est pas un facteur critique et peut varier dans de larges limites ; elle est toutefois de préférence inférieure à 6 moles par litre, et, plus particulièrement, comprise entre 2 et 4 moles par litre.

Selon le procédé décrit dans FR-A-2 472 601, on peut en outre ajouter en continu au mélange réactionnel soit isolément, soit en mélange avec la solution de sel de cérium, une solution aqueuse de sel d'au moins une terre rare trivalente contenant éventuellement l'yttrium et soluble dans les conditions de l'invention. Parmi les sels convenant bien, on citera notamment les chlorures ou les nitrates de lanthane, praséodyme, néodyme, samarium, europium, gadolinium, terbium, dysprosium, holmium, erbium, thulium, ytterbium, lutécium, d'yttrium. En particulier, on peut mettre en oeuvre une solution contenant le sel de cérium et des sels de terres rares et qui proviendrait directement ou indirectement du traitement des minerais de terres rares.

La concentration de la solution de sel(s) de terre(s) rare(s) mise en oeuvre n'est pas un facteur critique et elle peut varier dans de larges limites ; elle est toutefois, de préférence, comprise entre 0,2 et 1 mole par litre.

On effectue le mélange des différents réactifs précités. Il est à noter que le nombre d'équivalents anioniques mis en oeuvre est supérieur ou égal au nombre d'équivalents cationiques mis en oeuvre.

La température du milieu réactionnel doit être comprise, de préférence, entre 20 et 95°C et, plus particulièrement, entre 50 et 70°C.

Le temps de séjour du mélange dans le milieu réactionnel n est pas un facteur critique et peut varier dans de larges limites ; généralement on mettra en oeuvre des temps de séjour compris entre 30 minutes et 2 heures.

La masse réactionnelle peut être mûrie pendant un certain temps à une température comprise entre 20 et 95°C et, de préférence entre 50 et 80°C avant l'opération de filtration. Dans ce cas, le temps de mûrissement n'est pas un facteur critique selon l'invention et peut varier dans de larges limites ; toutefois, un temps pouvant aller jusqu'à 2 heures est généralement satisfaisant.

La deuxième étape du procédé d'obtention de la composition décrite dans FR-A-2 472 601, consiste à filtrer après réaction la masse réactionnelle qui se présente sous la forme d'une suspension.

Le gâteau de filtration peut être ensuite lavé avec de l'eau ou une solution d'un sel d'ammonium.

Le produit obtenu après filtration et éventuellement lavage est ensuite séché éventuellement en continu. La température de séchage est comprise de préférence entre 100 et 600°C, le temps de séchage n'est pas critique et peut varier dans ces conditions, entre 30 minutes et 24 heures.

Le produit sec est ensuite calciné éventuellement en continu à une température comprise entre 600°C et 1200°C pendant une durée généralement comprise entre 30 minutes et 2 heures.

Les compositions obtenues selon le procédé décrit ci-dessus peuvent être soumises éventuellement à des opérations de broyage et de sélection granulométrique selon les techniques bien connues de l'homme de l'art.

Conformément à la présente invention, on met en oeuvre préférentiellement les compositions à base d'oxyde cérique obtenues selon le procédé décrit ci-dessus mais en faisant appel aux anions cités préférentiellement tels que fluorure, sulfate, borate ou phosphate.

Convient également à la présente invention l'oxyde cérique sous la forme des compositions décrites dans FR-A-2 549 846 qui comprennent une phase cristallographique du type $CeO_2$ et une phase cristallographique constituée par un pyrosilicate de terres rares répondant à la formule $Ln_{2-x} Ce_x Si_2O_7$ dans laquelle Ln représente au moins un élément pris dans le groupe constitué par les lanthanides et l'yttrium et dans laquelle x est supérieur ou égal à 0 et inférieur à 2.

Les compositions décrites dans FR-A-2 549 846 répondent à l'analyse chimique suivante :
- de 75 à 95 % en poids de terres rares exprimées en oxydes avec un pourcentage d'oxyde cérique par rapport au poids total des oxydes de terres rares variant de 60 à 85 %

- de 5 à 25 % en poids de silicium exprimé en $SiO_2$.

Elles renferment essentiellement deux phases cristallographiques : une phase de type $CeO_2$ à structure cubique et une phase pyrosilicate de terres rares $Ln_{2-x}Ce_xSi_2O_7$ de structure orthorhombique : x est supérieur ou égal à O et inférieur à 2, et de préférence, x est supérieur ou égal à O et inférieur ou égal à 0,2. Elles contiennent également en quantités moindres, un phase d'oxydes de terres rares généralement un sesquioxyde $Ln_2O_3$ de structure cubique type fluorine et une phase de dioxyde de silicium $SiO_2$ sous forme vitreuse ou cristallisée.

Les proportions des différentes phases varient en fonction de la quantité des matières premières mises en oeuvre et des conditions de calcination.

Généralement, elles sont les suivantes :

- $CeO_2$ : 30 à 80 %
- $Ln_{2-x}Ce_xSi_2O_7$ : 12 à 60 %
- $Ln_2O_3$ : O à 15 %
- $SiO_2$ : 1,5 à 8 %

Les compositions décrites dans FR-A-2 549 846 sont obtenues selon un procédé qui consiste à mélanger simultanément, une solution de sel de cérium, une solution basique, une solution aqueuse de sel d'au moins une terre rare trivalente ou d'yttrium et une solution d'au moins un dérivé oxygéné du silicium susceptible de former des composés insolubles de terres rares ; à filtrer le précipité obtenu ; à le sécher et à le calciner à une température supérieure à 850°C.

Dans la première étape du procédé, on réalise le mélange des différents réactifs.

La solution de sel de cérium, la solution basique et la solution aqueuse de sel de terre rare trivalente sont caractérisées ci-dessus.

La proportion entre la solution basique et la solution de sel de cérium doit être telle que le nombre d'équivalents de la solution basique introduits soit supérieur ou égal au nombre d'équivalents cérium introduits dans le même temps. Il peut être avantageux de mettre en oeuvre un excès supérieur à 5 % d'équivalents basiques par rapport aux équivalents cérium. Le pH du milieu réactionnel peut varier entre 5 et 10. Il est avantageusement compris entre 7 et 9. Il peut être particulièrement avantageux de régler le pH dans ces limites à une valeur constante à ± 0,1 unité de pH.

La proportion entre la solution d'un sel de cérium et la solution aqueuse d'un ou des sels de terres rares trivalentes est telle que le rapport entre le dioxyde de cérium et les oxydes de terres rares ($CeO_2$ + $Ln_2O_3$) varie entre 60 et 85 % en poids.

La solution d'au moins un dérivé oxygéné du silicium peut être toute solution aqueuse de dérivé oxygéné du silicium susceptible de former des composés insolubles de terres rares. Le ou les dérivés du silicium doivent être solubles dans l'eau. On peut faire appel aux composés suivants : dioxyde de silicium, acide silicique et silicates de métaux alcalins. Plus précisément, on citera la silice amorphe, l'acide métasilicique, l'acide métadisilicique, l'orthosilicate de sodium, le silicate de sodium de formule $Na_2O, xSiO_2$ dans laquelle x varie de 3 à 5, le métasilicate de sodium, le métadisilicate de sodium, le métasilicate de potassium, le métadisilicate de potassium, le tétrasilicate de potassium. On peut employer indifféremment ces sels sous forme anhydre ou hydratée.

On utilise de préférence le silicate de sodium $Na_2O,4SiO_2$.

La concentration de la solution d'un ou des dérivés oxygénés du silicium n'est pas un facteur critique selon l'invention et elle peut varier dans de larges limites ; lorsqu' elle est exprimée en moles/litre de $SiO_2$, elle est comprise entre 0,1 et 2,0.

La proportion entre la solution d'un ou des dérivés oxygénés du silicium et la solution aqueuse d'un ou des sels de terres rares trivalentes est définie de façon à avoir un rapport entre les équivalents silicate ($SiO_3$=) et les équivalents terre(s) rare(s) trivalente(s) qui se situe entre 0,1 et 1, de préférence, entre 0,2 et 0,6.

Dans le procédé décrit dans FR-A-2 549 846 le nombre d'équivalents anioniques mis en oeuvre est supérieur ou égal au nombre d'équivalents cationiques mis en oeuvre ; il ne doit toutefois pas conduire à la formation de composés d'adsorption sur la composition obtenue par le mélange des réactifs.

On peut réaliser le mélange des différentes solutions des réactifs précités selon de nombreuses variantes. Par exemple, on peut faire le mélange sous agitation en ajoutant en continu et par voie séparée la solution de sel de cérium, éventuellement la solution de l'agent oxydant, la solution de sel(s) de terre(s) rare(s), la solution de dérivé(s) oxygéné(s) du silicium et la solution basique. On peut également effectuer le prémélange de la solution de sel de cérium et de la solution de sel(s) de terre(s) rare(s) qui est ajoutée en continu au milieu réactionnel en parallèle avec les deux autres solutions. On peut aussi faire le prémélange de la solution de dérivé(s) oxygéné(s) de silicium avec la solution basique. Dans le cas de l'emploi d'un agent oxydant, il est possible de le mettre en oeuvre en mélange avec une solution autre que celle de la

EP 0 266 233 B1

base, en particulier, en mélange avec la solution de sel de cérium et/ou de la solution de sel(s) de terre(s) rare(s).

Les opérations de mélange, de filtration, de séchage se font dans les conditions décrites ci-dessus.

Le produit sec est ensuite calciné éventuellement en continu à température d'au moins 850°C mais située de préférence entre 850 et 1050°C. La borne supérieure définissant la gamme de température n'est pas critique et peut atteindre des valeurs aussi élevées que 1500°C.

On réalise ensuite le broyage du produit calciné de telle sorte qu'il présente des dimensions d'agrégats allant de 0,2 à 5,0 μm. Généralement la taille des agrégats exprimée par le diamètre moyen varie de 0,5 à 1,5 μm. On définit le diamètre moyen comme étant un diamètre tel que 50 % en poids des agrégats ont un diamètre supérieur ou inférieur au diamètre moyen.

Le broyage peut être accompagné d'une opération de sélection granulométrique qui peut être réalisée simultanément ou successivement.

Les compositions d'oxyde cérique décrites dans FR-A-2 545 830 qui contiennent de l'oxyde cérique associé à au moins un oxyde non coloré d'une autre terre rare trivalente sont également bien adaptées à la mise en oeuvre de la présente invention.

Comme oxydes de terres rares non colorés ,on peut citer l'oxyde de lanthane, samarium, europium, gadolinium, dysprosium, thulium, ytterbium, lutécium et d'yttrium. Ces oxydes sont, généralement sous forme sesquioxyde.

On peut également mettre en oeuvre un mélange de ces oxydes.

D'une manière préférentielle, on utilise le sesquioxyde de lanthane.

Les proportions d'oxyde cérique et d'oxydes de terres rares dans la composition de polissage décrite dans FR-A-2 545 830 peuvent varier dans les limites suivantes :
- de 40 à 99,5 % en poids d'oxyde cérique
- de 0,5 à 60 % en poids d'oxydes de terres rares.

D'une manière préférée, on choisira une composition contenant :
- de 85 à 98 % en poids d'oxyde cérique
- de 2 à 15 % en poids d'oxydes de terres rares.

Les compositions décrites dans FR-A-2 545 830 sont préparées selon un procédé qui consiste à mélanger simultanément, en continu, une solution de sel de cérium, une solution basique et une solution d'au moins un sel d'une terre rare trivalente choisie dans le groupe constitué par les lanthanides et l'yttrium et dont l'oxyde n'est pas coloré : le nombre d'équivalents basiques mis en oeuvre étant supérieur ou égal au nombre d'équivalents cérium et terres rares et le pH du milieu réactionnel étant supérieur à 6 ; à filtrer le précipité obtenu ; à le sécher ; à le calciner.

Dans la première étape du procédé, on réalise le mélange des différents réactifs.

La solution de sel de cérium et la solution basique sont décrites ci-dessus.

Selon le procédé décrit dans FR-A-2 545 830, on ajoute en continu au mélange réactionnel soit isolément, soit en mélange avec la solution de sel de cérium, une solution aqueuse de sel d'au moins une terre rare trivalente choisie dans le groupe constitué par les lanthanides et l'yttrium et ayant pour caractéristique de former un oxyde non coloré. Le sel doit être soluble dans les conditions de l'invention. Parmi les sels convenant bien, on citera notamment les chlorures ou les nitrates de lanthane, samarium, europium, gadolinium,dysprosium, thulium, ytterbium, lutécium et d'yttrium.

La concentration de la solution de sel(s) de terre(s) rare(s) mise en oeuvre n'est pas un facteur critique et elle peut varier dans de larges limites ; elle est toutefois, de préférence, comprise entre 0,2 et 4 moles par litre.

La proportion entre la solution de sel de cérium et la solution de sel(s) de terre(s) rare(s) est déterminée par régulation des débits respectifs de telle sorte que l'on obtienne la composition souhaitée avec les pourcentages pondéraux de chaque constituant définis ci-dessus.

La proportion entre la solution basique et la solution de sel de cérium et de sel(s) de terre(s) rare(s) doit être telle que le nombre d'équivalents basiques introduits soit supérieur ou égal au nombre d'équivalents cérium et terre(s) rare(s) introduits dans le même temps. Il peut être avantageux de mettre en oeuvre un excès supérieur à 5 % d'équivalents basiques par rapport aux équivalents cérium et terre(s) rare(s). Le pH du milieu réactionnel qui doit être alors supérieur à 6, ne doit toutefois pas dépasser 10. Il est avantageusement compris entre 7 et 9. Il peut être particulièrement avantageux de régler le pH dans ces limites à une valeur constante à ± 0,1 unité de pH.

On peut réaliser le mélange des différentes solutions des réactifs précités selon de nombreuses variantes. Par exemple, on peut faire le mélange sous agitation en ajoutant en continu et par voie séparée la solution de sel de cérium, éventuellement la solution de l'agent oxydant, la solution de sel(s) de terre(s) rare(s) et la solution basique. On peut également effectuer le prémélange de la solution de sel de cérium et

6

de la solution de sel(s) de terre(s) rare(s) qui est ajoutée en continu au milieu réactionnel en parallèle avec la solution basique. Dans le cas de l'emploi d'un agent oxydant, il est possible de le mettre en oeuvre en mélange avec la solution de sel de cérium et/ou de la solution de sel(s) de terre(s) rare(s).

La température du milieu réactionnel n'est pas critique et peut être comprise, de préférence, entre 10 et 95°C et, plus particulièrement, entre 20 et 70°C.

Le temps de séjour du mélange dans le milieu réactionnel n'est pas un facteur critique et peut varier dans de larges limites ; généralement, on choisira des temps de séjour compris entre 30 minutes et 2 heures.

Selon une variante du procédé décrit dans FR-A-2 545 830, la masse réactionnelle peut être mûrie pendant un certain temps à une température comprise entre 10 et 95°C et, de préférence entre 20 et 80°C avant l'opération de filtration. Dans ce cas, le temps de mûrissement n'est pas un facteur critique et peut varier dans de larges limites ; toutefois, un temps pouvant aller de 30 minutes jusqu'à 2 heures est généralement satisfaisant. L'opération de mûrissement s'effectue sous agitation.

La deuxième étape du procédé d'obtention de la composition décrite dans FR-A-2 545 830, consiste à filtrer après réaction la masse réactionnelle qui se présente sous la forme d'une suspension.

Le gâteau de filtration peut être ensuite lavé avec de l'eau.

Le produit obtenu après filtration et éventuellement lavage est ensuite séché éventuellement en continu. La température de séchage est comprise de préférence entre 100 et 600°C, le temps de séchage variant dans ces conditions de préférence entre 30 minutes et 2 heures.

Le produit sec est ensuite calciné éventuellement en continu à une température comprise entre 600 et 1200°C, de préférence 950° à 1150°C, pendant un temps généralement compris entre 30 minutes et 10 heures.

On réalise le broyage du produit calciné et éventuellement une opération de sélection granulométrique comme dans FR-A-2 549 846.

Une autre variante du procédé décrit dans FR-A-2 545 830 consiste à réaliser le mélange effectué dans la première étape selon deux voies (1) et (2) qui sont en tout point semblable sauf en ce qui concerne la température réactionnelle : la voie (1) conduit à l'obtention d'un précipité à chaud alors que selon la voie (2), le précipité est obtenu à froid. On fait ensuite le mélange des précipités obtenus selon la voie (1) et la voie (2) soit avant filtration, soit après filtration.

Pour plus de détails sur cette variante d'exécution, on se référera à FR-A-2 545 830.

Conformément à la présente invention interviennent dans les compositions de polissage destinées au polissage des verres organiques, **utilisées dans le procédé de l' invention** un oxyde cérique seul ou sous forme de composition et un sel céreux.

Pour ce qui est du sel céreux, on peut faire appel à tout sel de cérium III soluble dans les conditions de polissage. Ledit sel de cérium III doit être soluble dans l'eau ou dans de l'eau faiblement acidifiée de pH inférieur à 7.

A titre de sels céreux convenant selon l'invention, on peut citer des sels minéraux sous formes anhydres ou cristallisées tels que, par exemple, le chlorure, le sulfate, le nitrate de cérium III ou bien des sels organiques comme, par exemple, l'acétate de cérium III.

D'une manière préférentielle, on met en oeuvre le nitrate de cérium III.

La proportion des constituants est telle que le pourcentage pondéral entre le sel céreux exprimé en cérium III et l'oxyde cérique exprimé en $CeO_2$ varie entre 0,2 et 5 %. La borne supérieure ne présente aucun caractère critique mais l'on ne tire aucun avantage à mettre une quantité plus grande de sel céreux. D'une manière préférentielle, on choisit un pourcentage compris entre 0,5 et 1,5 %.

Les compositions de polissage **utilisées dans le procédé** selon l'invention faisant intervenir les constituants précités peuvent se présenter sous la forme d'une suspension aqueuse dont la concentration en oxyde cérique peut varier dans de larges limites, par exemple de 50 à 600 g/l mais choisie préférentiellement entre 250 et 450 g/l.

Le milieu aqueux est de préférence de l'eau désionisée ou distillée.

Elles peuvent également se présenter sous la forme d'une poudre. A cet effet, on peut effectuer la préparation par un mélange à sec de l'oxyde cérique et du sel de cérium III sous forme solide.

Le mélange des constituants peut être effectué dans un mélangeur à poudres de type connu : mélangeurs à chute libre du type tambour, mélangeurs verticaux ou horizontaux à vis hélicoïdale, mélangeurs planétaires, mélangeurs horizontaux type Lödige etc..

La durée du mélange est fonction de l'appareil utilisé et sera poursuivie jusqu' à obtention d'un mélange homogène.

Une autre variante d'exécution consiste à utiliser une technique d'imprégnation, en imprégnant l'oxyde cérique à l'aide de la solution aqueuse de sel de cérium III.

D'une manière pratique, on peut réaliser l'imprégnation en pulvérisant sur l'oxyde cérique mis en mouvement, par exemple, par la rotation d'un drageoir, la solution de sel de cérium III.

Il est également possible d'imprégner l'oxyde cérique par trempage de celui-ci dans la solution de sel de cérium III et d'éliminer l'excès de solution par égouttage et séchage le plus souvent effectués à température ambiante.

Selon une variante préférée de l'invention, l'imprégnation est réalisée "à sec" c'est-à-dire que le volume total de solution utilisée est approximativement égal au volume poreux total présenté par le support. Pour la détermination du volume poreux, on peut le faire selon la méthode connue au porosimètre à mercure (norme ASTM D 4284-83) ou bien mesurer sur un échantillon, la quantité d'eau qu'il absorbe.

Les compositions **utilisées dans le procédé** de l'invention qu'elles soient sous forme de suspension aqueuse ou de poudre sont applicables au polissage de tous les verres organiques.

C'est ainsi que l'on peut les utiliser pour le polissage des verres organiques constitués de polymères thermoplastes tels que cellulose, diacétate de cellulose, acéto-butyrate armé, polyméthylméthacrylate et polystyrène ou de polymères monoplastes tels que formol-urée plastifiée, polydiallylphtalate, polydiallylglycol carbonate.

Elles conviennent tout particulièrement au polissage de verres organiques en polydiallyldiéthylèneglycol carbonate.

Le domaine d'application de l'invention ne se limite pas au **procédé** de polissage des lentilles ophtalmiques mais vise le polissage de tout verre organique quelle que soit la forme sous laquelle il se présente.

La mise en oeuvre **du procédé** de l'invention pour le polissage du verre se fait d'une manière classique. Comme **les compositions de polissage utilisées** interviennent généralement dans un système de polissage à l'arrosé, elles sont en suspension dans l'eau.

La confection des bains de polissage est réalisée, simplement, par addition de la composition **de polissage** sous forme poudre au milieu aqueux mis sous agitation manuellement ou par des moyens classiques d'agitation (agitation à ancre, à hélice ou à turbine etc...) ou utilisée telle quelle lorsque la composition de l'invention est sous forme de suspension aqueuse.

La quantité de composition introduite est telle que, généralement, la concentration de la composition exprimée en $CeO_2$ varie de 50 à 600 g par litre de bain, de préférence environ 250 et 450 g/litre.

La qualité de l'eau intervenant pour la préparation du bain de polissage ne présente aucun caractère critique mais il est préférable pour avoir une bonne tenue en suspension de la composition de l'invention, d'utiliser une eau douce c'est-à-dire une eau présentant une dureté inférieure à 5° TH.

Il peut être intéressant d'ajouter dans le bain de polissage un agent anti-mousse tel que, par exemple, un polysiloxane. La quantité dudit agent peut représenter de 0,1 à 10 % du poids de la composition de l'invention.

La température du bain est choisie de telle sorte qu'elle soit inférieure à 30° C. Il est intéressant de travailler à des températures plus basses comprises entre 1 et 10° C car toute élévation de température diminue l'efficacité polissante.

**Le procédé** de polissage de l'invention s'avère présenter de nombreux avantages :
- **les compositions de polissages** présentent une bonne tenue en suspension
- **il conduit** à des performances améliorées : de très bonne efficacité polissante aussi importante qu'avec les alumines d'où rapidité de polissage (gain de temps pouvant atteindre 50 96 par rapport à celui obtenu avec l'oxyde cérique seul), très faible taux de rebut des pièces polies;
- **il permet** d'obtenir un très bon état de surface : pas de voile, ni de rayures et filandres;
- **les compositions** possèdent une durée de vie aussi longue que celle obtenue avec les alumines sans qu'il y ait baisse de cadence.

Avant d'exemplifier le **procédé** de l'invention pour le polissage des verres organiques, on décrit, ci-après le test de polissage permettant d'apprécier le comportement **des compositions de polissage.**

Dans les différents essais, on met en oeuvre des verres organiques en polydiallyldiéthylèneglycol carbonate mis sur le marché sous la dénomination CR 39® ou ORMA 1000®.

Ce sont des galets sphériques ayant un diamètre de 70 mm dont seule la face concave (concavité = -6 dyoptries) est soumise à l'opération de polissage, l'autre face qui n'est pas travaillée est recouverte d'une couche de peinture mâte noire afin de protéger ladite surface et de faciliter l'observation du poli obtenu.

En raison de leur fragilité et de leur rayabilité, les verres organiques nécessitent une préparation : le doucissage qui consiste à préparer la face du galet et à l'amener à un état de surface reproductible dans le but de quantifier ensuite l'enlèvement de matière opéré au cours du polissage.

1. On conduit les essais de doucissage sur une machine COBURN® 603 à une seule broche et dont le polissoir est arrosé uniformément par de l'eau.

EP 0 266 233 B1

Les conditions opératoires sont les suivantes :

- vitesse du polissoir      500 tours/mn
- vitesse de la broche      identique car la broche est entrainée par le polissoir
- pression      40 g/cm²
- dureté de l'eau      28° TH
- température      20°C
- polissoir      abrasif (UNIVERSAL® MF 10)
- verre à polir      CR 39
- débit de la turbine      1,2 à 1,4 l/mn
- durée de l'essai      1 mn

On effectue le changement du polissoir abrasif après chaque essai.

Le verre ainsi douci est ensuite poli.

2 - On mesure l'efficacité polissante de la composition de l'invention de la manière qui suit :

On conduit les essais de polissage sur une machine COBURN®603 à une seule broche et dont le polissoir en velours floché est arrosé uniformément par la composition à tester.

Les conditions opératoires sont les suivantes :

- vitesse du polissoir      500 tours/mn
- vitesse de la broche      identique car la broche est entrainée par le polissoir
- pression      40 g/cm²
- dureté de l'eau      28° TH
- température      20°C
- polissoir      abrasif (UNIVERSAL® MF 10)
- verre à polir      CR 39
- débit de la turbine      1,2 à 1,4 l/mn
- durée de l'essai      1 mn

On effectue les mesures d'efficacité polissante, on règle la machine avec un produit étalon.

La face concave de deux galets de verre est travaillée pendant 7 minutes au bout desquelles l'enlèvement de matière est déterminée par pesée.

Le poids moyen enlevé est ramené à :

- unité de poids : le mg
- unité de surface : le dm²
- unité de temps : la mn

On exprime l'efficacité polissante comme la moyenne de 3 essais.

3 - De par la nature même du substrat, le polissage des verres organiques implique de parler en termes d'efficacité associée à qualité de poli.

On observe l'état de surface immédiatement après le polissage en évitant toute pression mécanique de la surface notamment lors du rinçage effectué à l'eau desionisée et du séchage réalisé à l'air comprimé.

Après le polissage, l'état de surface sera observé de 3 manières différentes et successives.

- à l'oeil nu, afin de déterminer les grosses rayures,
- à la loupe, pour la mise en évidence des rayures plus fines et du grain. Celui-ci témoigne d'un temps de polissage insuffisant car il est dû à un reste de douci,

9

- au condenseur de lumière. Le pinceau de lumière frappe la surface de manière rasante et permet d'observer les filandres et surtout la présence d'un voile après polissage.

Les exemples qui suivent illustrent l'invention sans toutefois la limiter.

Les exemples 1 à 4 décrivent les compositions de polissage qui sont ensuite testées pour le polissage du verre organique tel que décrit dans l'exemple 5.

Les exemples 6 à 8 illustrent par rapport aux exemples précédents d'autres compositions de polissage faisant intervenir soit une autre ressource d'oxyde cérique (exemple 6) soit un autre sel céreux (exemples 7 et 8) et leur utilisation au polissage du verre organique.

Dans les exemples, les pourcentages donnés sont exprimés en poids.

EXEMPLE 1 -

On effectue la préparation d'une suspension d'oxyde cérique à partir d'une composition d'oxyde cérique contenant 66 % d'oxyde cérique : ladite composition préparée conformément à FR-A-2 472 601 est isponible sur le marché sous la dénomination commerciale Cérox 1600®.

Plus précisément, les caractéristiques du Cérox 1600® sont les suivantes :
- composition chimique
  - oxydes de terres rares 94 %
  - oxyde cérique 66 %
  - oxyde de lanthane 19 %
  - oxyde de néodyme 9 %
  - oxyde de praséodyme < 0,0001 %
  - fluorure exprimé en F⁻ 4 %
  - phosphate exprimé en $P_2O_5$ 4 %
- densité apparente tassée : $d_A$ = 1,6 + 0,2
- surface spécifique : s.s. = 6 + 1 $m^2/g$
- diamètre moyen des particules : $d_{50}$ = 1,5 + 1 $\mu$m.
- % de particules de diamètre supérieur à 15 $\mu$m : 0 96

On prépare un litre de suspension aqueuse d'oxyde cérique ayant la composition suivante :
- 400 g de Cérox 1600®
- 12 g de nitrate céreux $Ce(NO_3)_3$ , $6H_2O$
- 940 $cm^3$ d'eau désionisée

EXEMPLE 2 -

On effectue la préparation d'une suspension d'oxyde cérique à partir d'une composition d'oxyde cérique contenant 92 % d'oxyde cérique : ladite composition préparée conformément à FR-A-2 545 830 est commercialisée par la Société RHONE-POULENC sous la dénomination commerciale Cérox G.G.®

Le Cérox G.G.® présente les caractéristiques suivantes :
- composition chimique
  . oxyde cérique 92 %
  . sesquioxyde de lanthane 8 %
- densité apparente tassée : $d_A$ = 1,6 ± 0,2
- surface spécifique : s.s. = 6 ± 2 $m^2/g$
- diamètre moyen des particules : $d_{50}$ = 1 ± 0,5 $\mu$m
- % de particules de diamètre supérieur à 15 $\mu$m = 0 %

On prépare un litre de suspension aqueuse d'oxyde cérique ayant la composition suivante :
- 400 g de Cérox G.G.®
- 12 g de nitrate céreux $Ce(NO_3)_3$, $6 H_2O$
- 940 $cm^3$ d'eau désionisée.

EXEMPLE 3 -

Dans cet exemple, on réalise la préparation de la composition de polissage sous la forme d'une poudre.

Dans un mélangeur statique, on mélange à sec 1000 g de Cérox 1600 et 30 g de nitrate céreux cristallisé $Ce(NO_3)_3$ , $6H_2O$. L'opération de mélange dure 2 heures.

On met le mélange directement en suspension dans de l'eau désionisée à la concentration requise pour le polissage à savoir 400 g/l exprimée en $CeO_2$.

10

EXEMPLE 4 -

Dans l'exemple qui suit, on effectue la préparation de la composition de polissage selon une technique d'imprégnation.

On mélange 1000 g de Cérox 1600® et 200 cm³ d'une solution de nitrate céreux contenant 150 g/l de $Ce(NO_3)_3$, 6 $H_2O$.

L'opération de mélange dure 1 heure.

On met le mélange directement en suspension dans de l'eau désionisée à la concentration requise pour le polissage à savoir 400 g/l exprimée en $CeO_2$.

EXEMPLE 5 -

Les compositions de polissage décrites dans les exemples 1 à 4 sont soumises au test de polissage conduit dans les conditions mentionnées ci-dessus.

Les résultats obtenus sont consignés dans le tableau (I) suivant :

TABLEAU I

| | Efficacité polissante en mg/dm²/mn | Qualité du poli |
|---|---|---|
| exemple 1 | 55 ± 5 | pas de rayures<br>pas de voile sur la surface |
| exemple 2 | 50 ± 5 | pas de rayures<br>pas de voile sur la surface |
| exemple 3 | 55 ± 5 | pas de rayures<br>pas de voile sur la surface |
| exemple 4 | 55 ± 5 | pas de rayures<br>pas de voile sur la surface |

A titre de comparaison, on donne dans le tableau II l'efficacité polissante de compositions de polissage ayant la même composition que celle donnée dans les exemples 1 à 4 mais en supprimant le sel céreux.

TABLEAU II

| | Efficacité polissante en mg/dm²/mn | Qualité du poli |
|---|---|---|
| essai A | 25 | fines rayures- face voilée |
| essai B | 20 | fines rayures - face voilée |
| essai C | 25 | fines rayures - face voilée |
| essai D | 25 | fines rayures - face voilée |

## EXEMPLE 6 -

On effectue la préparation d'une suspension d'oxyde cérique à partir d'une composition d'oxyde cérique contenant 63 % d'oxyde cérique : ladite composition préparée conformément à FR-A-2 549 846 est commercialisée par la Société RHONE-POULENC sous la dénomination commerciale Cérox S.®

Le Cérox S.® présente les caractéristiques suivantes :
- composition chimique
  - . oxyde cérique............ 63 %
  - . oxyde de lanthane........ 27 %
  - . oxyde de terres rares.... 90 %
  - . silice.................... 10 %
- densité apparente tassée . $d_A$ = 1,6 + 0,2
- surface spécifique : s.s. = 5 + 3 m²/g
- diamètre moyen des pairticules : $d_{50}$ = 2 + 1 $\mu$m
- % de particules de diamètre supérieur à 15$\mu$m = 0 %

On prépare un litre de suspension aqueuse d'oxyde cérique ayant la composition suivante :
- 400 g de Cérox S.®
- 12g de nitrate céreux $Ce(NO_3)_3$, 6 $H_2O$
- 940 cm³ d'eau désionisée.

L'efficacité polissante obtenue avec la composition précitée est de 56 mg/dm²/mn.

Il n'y a ni rayures, ni voile sur la surface du verre organique poli.

## EXEMPLE 7 -

Dans cet exemple, on met en oeuvre une solution de chlorure céreux à 250 g/l de $CeCl_3$ préparée par dissolution de carbonate céreux dans une solution aqueuse d'acide chlorhydrique.

On prépare un litre de suspension aqueuse d'oxyde cérique ayant la composition suivante :
- 400 g de Cérox 1600®
- 27,2 cm³ de la solution précitée soit 6,8 g de $CeCl_3$
- 913 cm³ d'eau désionisée

L'efficacité polissante obtenue en mettant en oeuvre la composition de polissage précitée est de 48 mg/dm²/mn.

On ne décèle ni rayures, ni voile à la surface du verre organique poli.

## EXEMPLE 8 -

Dans le présent exemple, à titre de sels céreux, on fait appel à l'acétate céreux.

On prépare un litre de suspension aqueuse d'oxyde cérique ayant la composition suivante :
- 400 g de Cérox 1600®
- 9,5 g d'acétate céreux $Ce(CH_3COO)_3$, 1,5 $H_2O$
- 940 $cm^3$ d'eau désionisée.

L'efficacité polissante obtenue avec cette composition de polissage est de 49 $mg/dm^2/mn$.

Le verre organique après polissage ne présente ni rayures, ni voile sur sa surface.

**Revendications**

1. Procédé de polissage d'objets en verres organiques caractérisé en ce qu'il consiste à polir le verre organique avec une composition de polissage comprenant de l'oxyde cérique et un sel céreux soluble dans les conditions du polissage.

2. Procédé selon la revendication 1, caractérisé en ce que le sel céreux soluble est le chlorure, le sulfate, le nitrate, l'acétate de cérium III.

3. Procédé selon la revendication 1 ou 2, caractérisé en ce que le pourcentage de sel céreux exprimé en cérium III par rapport à l'oxyde cérique exprimé en $CeO_2$ varie entre 0,2 et 5 %.

4. Procédé selon la revendication 3, caractérisé en ce que ledit rapport varie entre 0,5 et 1,5 %.

5. Procédé selon l'une des revendications précédentes, caractérisé en ce que la composition est une suspension aqueuse dont la concentration en oxyde cérique varie entre 50 et 600 g/l, de préférence entre 250 et 450 g/l.

6. Procédé selon l'une des revendications précédentes, caractérisé en ce que la composition est obtenue par mélange à sec de l'oxyde cérique et d'un sel de cérium III solide.

7. Procédé selon l'une des revendications 1 à 5, caractérisé en ce que la composition est obtenue par imprégnation de l'oxyde cérique avec une solution aqueuse de sel de cérium III.

8. Procédé selon l'une des revendications précédentes caractérisé en ce que l'oxyde cérique de la composition de polissage et sous forme seul ou sous forme de composition.

9. Procédé selon l'une des revendications précédentes caractérisé en ce que l'oxyde cérique de la composition de polissage est sous forme pulvérulente avec des particules de dimensions comprises entre 1 $\mu$m et 20 $\mu$m, de préférence comprise entre 0,1 $\mu$m et 10 $\mu$m.

10. Procédé selon l'une des revendications précédentes caractérisé en ce que l'oxyde cérique de la composition de polissage présente une surface spécifique comprise entre 1 et 35 $m^2/g$, de préférence entre 3 et 10 $m^2/g$.

11. Procédé selon l'une des revendications précédentes caractérisé par le fait que l'oxyde cérique et sous forme d'une composition obtenue selon un procédé qui consiste à mélanger simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en oeuvre étant supérieur ou égal au nombre d'équivalents cérium et le pH du milieu réactionnel étant supérieur à 6 ; à filtrer le précipité obtenu ; à la sécher ; à le calciner.

12. Procédé selon la revendication 11, caractérisé par le fait que l'on ajoute une solution aqueuse d'au moins une terre rare trivalente.

13. Procédé selon l'une des revendications 1 à 10 caractérisé par le fait que l'oxyde cérique est sous forme d'une composition comprenant une phase cristallographique du type $CeO_2$ et une phase cristallographique constituée par un pyrosilicate de terres rares répondant à la formule $Ln_{2-x} Ce_x Si_2 O_7$ dans laquelle Ln représente au moins un élément pris dans le groupe constitué par les lanthanides et l'yttrium et dans laquelle x est supérieur ou égal à 0 et inférieur à 2.

**14.** Procédé selon l'une des revendications 1 à 10 caractérisé par le fait que l'oxyde cérique est sous forme d'une composition obtenue selon un procédé qui consiste à mélanger simultanément, en continu, une solution de sel de cerium, une solution basique et une solution d'au moins un sel d'une terie rare trivalente choisie dans le groupe constitué par les lanthanides et l'yttrium et dont l'oxyde n'est pas coloré : le nombre d'équivalents basques mis en oeuvre étant supérieur ou égal au nombre d'équivalants cérium et terres rares et le pH du milieu réactionnel étant supèrieur à 6 ; à filtrer le précipité obtenu ; à le secher ; à le calciner.

**Claims**

**1.** A process for polishing objects of organic glasses characterised in that it involves polishing the organic glass with a polishing composition comprising ceric oxide and a cerous salt which is soluble under the polishing conditions.

**2.** A process according to claim 1 characterised in that the soluble cerus salt is cerium (III) chloride, sulphate, nitrate or acetate.

**3.** A process according to clad 1 or claim 2 characterised in that the percentage of cerous salt expressed in terms of ceriun III with respect to the ceric oxide expressed in terms of $CeO_2$ varies between 0.2 and 5%.

**4.** A process according to clad 3 characterised in that said ratio varies between 0.5 and 1.5%.

**5.** A process according to one of the preceding claims characterised in that the composition is an aqueous suspension in which the concentration of ceric oxide varies between 50 and 600 g/l, preferably between 250 and 450 g/l.

**6.** A process according to one of the preceding claims characterised in that the composition is obtained by dry mixing of the ceric oxide and a solid cerium (III) salt.

**7.** A process according to one of claims 1 to 5 characterised in that the composition is obtained by impregnation of the ceric oxide with an aqueous solution of ceriun (III) salt.

**8.** A process according to one of the preceding claims characterised in that the ceric oxide of the polishing composition is on its own or in the form of a composition.

**9.** A process according to one of the preceding claims characterised in that the ceric oxide of the polishing composition is in powder form with particles of sizes between 1 and 20 $\mu$m, preferably between 0.1 $\mu$m and 10 $\mu$m.

**10.** A process according to one of the preceding claims characterised in that the ceric oxide of the polishing composition has a specific surface area of between 1 and 35 m$^2$/g, preferably between 3 and 10m$_2$/g.

**11.** A process according to one of the preceding claims characterised in that the ceric oxide is in the form of a composition obtained in accordance with a process which comprises simultaneously mixing in a continuous mode a solution of cerium salt, a basic solution and a solution of at least one acid and/or salt in which the anion or anions is or are capable of forming insoluble compounds of rare earths, the number basic equivalents used being greater than or equal to the number of cerium equivalents and the pH-value of the reaction medium being higher than 6; filtering the precipitate obtained; drying it; and roasting it.

**12.** A process according to claim 11 characterised by adding an aqueous solution of at least one trivalent rare earth.

**13.** A process according to one of claims 1 to 10 characterised in that the ceric oxide is in the form of a composition comprising a crystallographic phase of the type $CeO_2$ and a crystallographic phase formed by a pyrosilicate of rare earths corresponding to the formula $Ln_{2-x}Ce_xSi_2O_7$ in which Ln represents at

14

EP 0 266 233 B1

least one element from the group formed by lanthenides and yttrium and in which x is greater than or equal to 0 and less than 2.

14. A process according to one of claims 1 to 10 characterised in that the ceric oxide is in the form of a composition obtained in accordance with a process which comprises simultaneously mixing in a continuous mode a cerium salt solution, a basic solution and a solution of at least one salt of a trivalent rare earth selected from the group formed by lanthanides and yttrium and the oxide of which is not coloured; the number of basic equivalents used being greater than or equal to the number of cerium and rare equivalents and the pH-value of the reaction medium being higher than 6; filtering the precipitate obtained; drying it; and roasting it.

**Patentansprüche**

1. Verfahren zum Polieren von organischen Glasgegenständen, dadurch gekennzeichnet, daß es darin besteht, daß man das organische Glas mit einem Poliermittel aus Cer-IV-oxid und einem unter den Polierbedingungen löslichen Cer-III-salz poliert.

2. Verfahren nach Anspruch 1, dadurch gekennzeichnet, daß das lösliche Cersalz das Cer-III-chlorid, -sulfat, -nitrat oder -acetat ist.

3. Verfahren nach Anspruch 1 oder 2, dadurch gekennzeichnet, daß der Prozentgehalt des Cer-III-salzes, ausgedrückt als Cer-III, bezogen auf das Cer-IV-oxid, angegeben als $CeO_2$, zwischen 0,2 und 5 % liegt.

4. Verfahren nach Anspruch 3, dadurch gekennzeichnet, daß dieses Verhältnis zwischen 0,5 und 1,5 % liegt.

5. Verfahren nach einem der vorangehenden Ansprüche, dadurch gekennzeichnet, daß das Mittel eine wäßrige Suspension mit einer Konzentration an Cer-IV-oxid zwischen 50 und 600 g/l, vorzugsweise zwischen 250 und 450 g/l ist.

6. Verfahren nach einem der vorangehenden Ansprüche, dadurch gekennzeichnet, daß das Mittel erhalten worden ist durch trockenes Vermischen des Cer-IV-oxids und des festen Cer-III-salzes.

7. Verfahren nach einem der Ansprüche 1 bis 5, dadurch gekennzeichnet, daß das Mittel erhalten worden ist durch Imprägnieren des Cer-IV-oxids mit einer wäßrigen Lösung des Cer-III-salzes.

8. Verfahren nach einem der vorangehenden Ansprüche, dadurch gekennzeichnet, daß das Cer-IV-oxid in dem Poliermittel allein oder in Form eines Mittels vorhanden ist.

9. Verfahren nach einem der vorangehenden Ansprüche, dadurch gekennzeichnet, daß das Cer-IV-oxid in dem Poliermittel in Pulverform vorliegt mit Teilchengrössen zwischen 1 $\mu$m und 20 $\mu$m, vorzugsweise zwischen 0,1 $\mu$m und 10 $\mu$m.

10. Verfahren nach einem der vorangehenden Ansprüche, dadurch gekennzeichnet, daß das Cer-IV-oxid des Poliermittels eine spezifische Oberfläche zwischen 1 und 35 $m^2$/g, vorzugsweise zwischen 3 und 10 $m^2$/g, aufweist.

11. Verfahren nach einem der vorangehenden Ansprüche, dadurch gekennzeichnet, daß das Cer-IV-oxid in Form eines Mittels vorliegt, erhalten nach einem Verfahren, das darin besteht, daß man gleichzeitig kontinuierlich eine Lösung des Cersalzes, eine basische Lösung und eine Lösung mindestens einer Säure und/oder eines Salzes, dessen Anion(en) mit Seltenen Erden unlösliche Verbindungen bilden können, vermischt, wobei die Anzahl der eingesetzten Basenäquivalente größer oder gleich der Anzahl der Ceräquivalente ist und der pH-Wert des Reaktionsmediums über 6 liegt, wobei man den erhaltenen Niederschlag abfiltriert, trocknet und calciniert.

12. Verfahren nach Anspruch 11, dadurch gekennzeichnet, daß man eine wäßrige Lösung mindestens eines dreiwertigen Seltenen Erdmetalls zusetzt.

15

**13.** Verfahren nach einem der Ansprüche 1 bis 10, dadurch gekennzeichnet, daß das Cer-IV-oxid in Form eines Mittels vorliegt, umfassend eine Kristallphase vom Typ $CeO_2$ und eine Kristallphase bestehend aus einem Pyrosilicat von Seltenen Erden entsprechend der Formel $Ln_{2-x} Ce_x Si_2 O_7$, in der Ln mindestens ein Element aus der Gruppe bestehend aus den Lanthaniden und Yttrium bedeutet, und wobei x größer oder gleich 0 und kleiner 2 ist.

**14.** Verfahren nach einem der Ansprüche 1 bis 10, dadurch gekennzeichnet, daß das Cer-IV-oxid in Form eines Mittels vorliegt, erhalten nach einem Verfahren, das darin besteht, daß man gleichzeitig kontinuierlich eine Lösung des Cersalzes, eine basische Lösung und eine Lösung mindestens eines Salzes eines dreiwertigen Seltenen Erdelements, ausgewählt aus der Gruppe bestehend aus den Lanthaniden und Yttrium, vermischt, wobei das Oxid nicht gefärbt ist und die Anzahl der eingesetzten Basenäquivalente größer oder gleich der Anzahl der Äquivalente an Cer und Seltenen Erden ist und der PH-Wert des Reaktionsmediums über 6 liegt, wobei man den erhaltenen Niederschlag abfiltriert, trocknet und calciniert.